(19) Europäisches Patentamt
European Patent Office
Office européen des brevets

(11) EP 2 606 073 B1

(12) # EUROPEAN PATENT SPECIFICATION

(45) Date of publication and mention of the grant of the patent:
**02.11.2022 Bulletin 2022/44**

(21) Application number: **11744016.4**

(22) Date of filing: **15.08.2011**

(51) International Patent Classification (IPC):
***C08C 1/07*** $^{(2006.01)}$ ***C08F 279/02*** $^{(2006.01)}$
***C08L 21/02*** $^{(2006.01)}$ ***C08L 51/04*** $^{(2006.01)}$
***C08L 55/02*** $^{(2006.01)}$

(52) Cooperative Patent Classification (CPC):
(C-Sets available)
**C08C 1/07; C08F 279/04; C08L 25/12; C08L 69/00; C08L 77/02;** C08L 55/02; C08L 2205/03; C08L 2205/035 (Cont.)

(86) International application number:
**PCT/EP2011/064025**

(87) International publication number:
**WO 2012/022710 (23.02.2012 Gazette 2012/08)**

(54) **PROCESS FOR THE PREPARATION OF AGGLOMERATED RUBBER LATICES AND THE USE THEREOF FOR THE MANUFACTURE OF POLYMER COMPOSITIONS**

VERFAHREN ZUR HERSTELLUNG VON AGGLOMERIERTEM KAUTSCHUKLATEX UND SEINE VERWENDUNG ZUR ERZEUGUNG VON POLYMERZUSAMMENSETZUNGEN

PROCÉDÉ POUR LA PRÉPARATION DE LATEX D'ÉLASTOMÈRE-CAOUTCHOUC AGGLOMÉRÉS ET LEUR UTILISATION POUR LA FABRICATION DE COMPOSITIONS DE POLYMÈRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.08.2010 EP 10172923**

(43) Date of publication of application:
**26.06.2013 Bulletin 2013/26**

(73) Proprietor: **INEOS Styrolution Group GmbH**
**60325 Frankfurt am Main (DE)**

(72) Inventors:
- **MICHELS, Gisbert**
  **51375 Leverkusen (DE)**
- **RAVISHANKAR, Kompalli**
  **Vadodara, State Gujarat (IN)**
- **MEEUS, Erwin**
  **2950 Kapellen (BE)**
- **HENDRICKX, Jacques**
  **2920 Kalmthout (BE)**

(74) Representative: **Jacobi, Markus Alexander**
**Patentanwälte**
**Isenbruck Bösl Hörschler PartG mbB**
**Eastsite One**
**Seckenheimer Landstraße 4**
**68163 Mannheim (DE)**

(56) References cited:
**EP-A2- 0 394 779** **WO-A1-00/26298**
**WO-A1-01/62812** **WO-A2-2008/020012**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 25/12, C08L 55/02;**
**C08L 69/00, C08L 55/02;**
**C08L 77/02, C08L 55/02**

## Description

The present invention relates to a process for the preparation of an agglomerated rubber latex and the use thereof for the manufacture of ABS thermoplastic molding compositions or thermoplastic compositions of the ABS type and polymer compositions containing ABS thermoplastic compositions. The agglomerated rubber latices are obtained through agglomeration of fine-particle rubber latices with specific particle diameters.

ABS molding compositions or molding compositions of the ABS type have for many years been used in large amounts as thermoplastic resins for the production of moldings of all kinds. The spectrum of properties of such resins can be varied within a wide range. Particularly important properties of ABS molding compositions that may be mentioned are impact strength, modulus of elasticity, processability (MVR), dimensional stability under heat, defined combinations of properties generally being of importance depending on the field of use.

For the production of ABS molding compositions according to the emulsion polymerization process coarse-particle rubber latices are necessary, e.g. butadiene rubber latices which can be produced by different methods.

For example, EP 394779 B1 describes the production of coarse-particle polybutadiene latices with a narrow particle size distribution using a seed latex and special emulsifiers. The drawback of this production is the extremely long polymerization time because of the kinetic laws of the emulsion polymerization, and especially the polybutadiene emulsion polymerization. A further disadvantage is the creation of a disproportionately large amount of the undesired Diels-Adler product 4-vinylcyclohexene due to the long polymerization time at elevated temperature. EP 394779 B1 is silent of a process of preparing a seed latex and agglomerating the same to obtain a latex which serves as a grafting basis to prepare thermoplastic resin compositions. Moreover thermoplastic resin compositions obtained from the graft polymers made in accordance with EP 394779 B1 show insufficient impact strength.

WO 01/62812 A1 relates to polymer compositions of two rubber graft polymers which have been obtained by seed polymerization using seed latex particles with defined particle diameters.

In principle, it is also known that coarse-particle rubber latices can be produced by the agglomeration of fine-particle rubber latices.

For example, the patent specifications CA958137A, CA1039439A1, DE1804758A1, EP0007810A2, US3663656A1, GB1521805A, US3551370A1, US3558541A1, US3652721A1, US3793403A1, US3928494A1, US3988010A1, and WO 2008/020012 A2 describe coarse-particle rubber latices and methods for their production by agglomeration of fine-particle rubber latices with acetic anhydride and ABS molding compositions based on these agglomerated rubber latices. Fatty acid emulsifiers which stabilize the fine-particle rubber latices in the alkaline pH-range, are used for the production of the fine-particle rubber latices. Fatty acid emulsifiers may have properties that are disadvantageous in the use for producing graft polymers and thermoplastic molding materials, e.g., of the ABS type, such as, for example, degradation of the base colour and formation of mold deposits during the processing of thermoplastic molding materials by injection molding. WO 00/26298 A1 describes coarse-particle rubber latices and methods for their production by agglomeration of fine-particle rubber latices with acetic acid and ABS molding compositions based on these agglomerated rubber latices.

From EP 1414899B1 ABS molding compositions are disclosed which show a improved constancy of properties by use of the combination of two graft rubber polymers. For the production of the graft rubber polymers a butadiene polymer seed latex, a butadiene latex with a defined particles size diameter using the seed latex and an agglomerated butadiene latex with a definded particles size are necessary. This process seems to be very complicated. First of all a seed latex A with a mean particle diameter $D_{50}$ of 10 to 100 nm has to be produced, second a latex B with a mean particles size $D_{50}$ of 80 to 220 nm has to be produced by emulsion polymerization using the latex A as seed and third the latex B is agglomerated to produce the latex C with a mean particles size of $D_{50}$ of 350 to 650 nm. Then the rubber latices B and C are grafted separately with acrylonitrile and styrene to produce two graft rubber polymers. Considering the complexity of these ABS molding compositions the achieved properties are disappointing.

Patent document US 2003/0139514 A1 describes the manufacture of rubber latices with a weight average particle diameter $D_w$ of at least 85 nm, which are agglomerated to form coarse-particle rubber latices. It is uncertain whether the disclosed agglomerated rubber latices are suitable for the production of ABS molding compositions. In detail, a method for the production of agglomerable rubber latices and their agglomeration is described, in which alkaline salts of fatty acids or rosin acids are used as emulsifiers, and in which the weight average particle diameter of the agglomerable rubber latex is 85 to 200 nm, and wherein the following relation between the amount of decomposed alkaline persulfate, an optional amount of salt, and the particle diameter of the fine-particle rubber latex must apply:

$$K = 2.3 \text{ to } 6 = W * (1 - 1.4S) * D_o$$

where W = amount of the decomposed alkali persulfate (in parts based on 100 parts by weight latex solid)

S = salt (in % based on latex solid)
$D_o$ = 85 - 200 nm (weight average of the particle diameter). Specific values of $D_o$ are not less than 129 nm. Further investigations showed that K-values outside the claimed range of 2.3 to 6 do not always result in detrimental melt volume rates and/or impact strengths.

Furthermore, it is disadvantageous that the production of coarse-particle rubber latices is limited to the use of fine-particle rubber latices having a particle size of at least 85 nm, which in turn requires the use of a finer-particle seed latex and entails an extended polymerization time.

The application US 2009/0076205 A1 describes the production of fine-particle polybutadiene rubber latices which are supposed to be suitable for producing ABS polymers after agglomeration to form polybutadiene particles larger than or equal to 300 nm. In this case, a mixture of potassium oleate and potassium abietate is used as emulsifiers, wherein disadvantageous properties are to be expected on the one hand with regard to the base colour of the ABS polymers because of the use of a fatty acid emulsifier, and wherein, on the other hand, it is very surprising that the potassium salt of the abietic acid, which has conjugated double bonds, should be suitable at all for the emulsion polymerization of butadiene.

It was therefore of particular interest to provide thermoplastic molding compositions from the ABS type which exhibit a good property profile. In particular, products with a high impact strength and good processability should be obtained.

Surprisingly the object according to the invention could be solved by providing a specific agglomerated rubber latex that can be successfully used to manufacture thermoplastic molding compositions especially from the ABS type which exhibit such a good property profile.

The agglomerated rubber latices can be specifically used for the manufacture of ABS graft rubber polymeres and molding compositions from the ABS type.

The agglomerated rubber latices are obtained by emulsion polymerization of the at least one unsaturated monomer in the presence of at least one resin acid-based emulsifier to obtain a starting rubber latex having a weight average particle diameter Dw of less than 120 nm, and wherein the following relation is met:

$$K = W * (1-1.4 * S) * D_W$$

is less than 2.3 nm or more than 6.0 nm, and wherein

W denotes the amount, in parts per one hundred parts by weight (pphr) of latex solids, of decomposed alkalipersulfate,
S is the amount of an optional salt (in % based on latex solids), or from
fine-particle rubber latices which are stabilized with resin acids and have a weight average diameter Dw of smaller than 85 nm.

Thus the present invention provides a process for the preparation of an agglomerated rubber latex, which process comprises the following steps:

a) emulsion polymerization of the at least one unsaturated monomer in the presence of at least one resin acid-based emulsifier to obtain a starting rubber latex having a weight average particle diameter Dw of equal to or less than 120 nm, and wherein the following relation is met:

$$K = W * (1-1.4 * S) * D_W$$

is less than 2.3 nm or more than 6.0 nm, and wherein

W denotes the amount, in parts per one hundred parts by weight (pphr) of latex solids, of decomposed alkalipersulfate determined by iodometric titration,

S is the amount of an optional salt (in weight-% based on latex solids),

b) subjecting said starting rubber latex to agglomeration,

wherein the content of fatty acids in the resin acid based emulsifier is less than 1 % by weight based on the total weight of the resin acid-based emulsifier.

In the following such process is occasionally referred to as process I).

In accordance with the present invention it has been surprisingly found that thermoplastic resin compositions with improved properties can be also obtained by starting from starting rubber latices having a weight average particle diameter Dw of equal to or less than 120 nm setting K to less than 2.3 nm or more than 6.0 nm, subjecting them to agglomeration, forming graft polymers from the agglomerated rubber lattices, and preparing thermoplastic resin compositions therefrom.

In process I) the parameter K is determined in accordance with US2003/0139514. That is, W denotes the amount, in parts per one hundred parts by weight (pphr) of latex solids, of decomposed alkalipersulfate. The amount of persulfate decomposed during the polymerization (W) is determined as the difference between the total amount of persulfate added and the amount of residual persulfate in the latex at the end of polymerization. S is the amount of an optional salt (in % based on latex solids). This amount is determined from the initial weight of these optional salts. With respect to the kind of these optional salts it can be also referred to US2003/0139514.

The end of the polymerization of the starting rubber latex is achieved when the temperature is reduced more than 30°C below the maximum temperature during the polymerization, at least below 50°C and in case the monomer conversion is less than 100% the non reacted momomers are removed under vaccum from the latex. The latex solids (in % per weight) are determined by evaporation of a sample at 180°C for 25 min. in a drying cabinet. In a comparable rubber polymerization trial to the starting rubber latex the amount of the residual persulfate was determined for a series of samples by iodometric titration. With the following equations and the known temperature in the rubber polymerization trial the temperature depending decomposition constant $k_d$ can be calculated and the constants $k_o$ and $E_a$ can be determined:

$$k_d = k_o * \exp [ - E_a / ( R * T) ]$$

$$k_o = 1.03 * 10^{14} [1/s]$$

$$E_a = 122270 [J/mol]$$

$$R = 8.314 [J/(mol*K)]$$

$$T = \text{temperature} [K]$$

$$PS_{t1} = PS_{to} * \exp [ - k_d * ( t_1 - t_o ) ]$$

$$PS_{t1} = \text{amount persulfate at time } t_1$$

$$PS_{to} = \text{amount persulfate at time } t_o$$

$$\text{Decomposed Persulfate} = ( PS_{to} - PS_{t1} )$$

With knowledge of the polymerization temperature, the polymerization time and the decomposition constant $k_d$ from above (based on the determined constants $k_o$ and $E_a$) the amount of decomposed persulfate can be calculated for the starting rubber latex (see also George Odian, Principles of Polymerization, 4th edition, 2004, p. 211).

In a preferred embodiment of process I) the weight average particle diameter Dw of the starting rubber latex obtained is equal to or less than 110 nm, more preferably equal to or less than 100 nm and still more preferably equal to or less than 90 nm.

In a further preferred embodiment of process I) the parameter K is less than 2.3 nm, preferably less than 2 nm, more preferably less than 1.5 nm, still more preferably less than 1.2 nm.

With respect to the further parameters of steps a) and b) of process I) it can be referred to those of process II)

below and the preferred embodiments thereof. If there is no particular reference to any of the processes I) or II) the respective disclosures apply to both processes.

The present invention further provides a process for the preparation of an agglomerated rubber latex, which process comprises the following steps:

a) emulsion polymerization of the at least one unsaturated monomer in the presence of at least one resin acid-based emulsifier to obtain a starting rubber latex having a weight average particle diameter Dw of less than 85 nm,
b) subjecting said starting rubber latex to agglomeration.

In the following such process is occasionally referred to as process II).

Process II) is in accordance with process I), that is, parameter K, as defined above, is set to less than 2.3 nm or more than 6.0 nm. With respect to the preferred ranges of K it can be referred to the above indications.

Preferably in process II) the starting rubber latex has a weight average particle diameter Dw of less than 84 nm and particularly preferably less than 83 nm.

Preferably the starting rubber latex includes polybutadiene latices produced by emulsion polymerization of butadiene. Up to 50 % by wt. (based on the total amount of monomers used for the production of polybutadiene polymers) of one or more monomers that are copolymerizable with butadiene can be used as comonomers.

Examples for such monomers include isoprene, chloroprene, acrylonitrile, styrene, alpha-methylstyrene, $C_1$-$C_4$-alkylstyrenes, $C_1$-$C_8$-alkylacrylates, $C_1$-$C_8$-alkylmethacrylates, alkyleneglycol diacrylates, alkylenglycol dimethacrylates, divinylbenzol; preferably, butadiene is used alone or mixed with up to 20% by wt., preferably 15% by wt. styrene and/or acrylonitrile.

As resin or rosin acid-based emulsifiers, those are being used in particular for the production of the starting rubber latices by emulsion polymerization that contain alkaline salts of the rosin acids. Salts of the resin acids are also known as rosin soaps. Examples include alkaline soaps as sodium or potassium salts from disproportionated and/or dehydrated and/or hydrated and/or partially hydrated gum rosin with a content of dehydroabietic acid of at least 30% by wt. and preferably a content of abietic acid of maximally 1% by wt. Furthermore, alkaline soaps as sodium or potassium salts of tall resins or tall oils can be used with a content of dehydroabietic acid of preferably at least 30% by wt., a content of abietic acid of preferably maximally 1% by wt. and a fatty acid content of preferably less than 1% by wt. Mixtures of the aforementioned emulsifiers can also be used for the production of the starting rubber latices. The use of alkaline soaps as sodium or potassium salts from disproportionated and/or dehydrated and/or hydrated and/or partially hydrated gum rosin with a content of dehydroabietic acid of at least 30% by wt. and a content of abietic acid of maximally 1% by wt. is advantageous.

Suitable molecular-weight regulators for the production of the starting rubber latices, in particular of the polybutadiene or styrene-butadiene latices include, for example, alkylmercaptans, such as n-dodecylmercaptan, tert-dodecylmercaptan, dimeric alpha-methylstyrene and terpinolene.

In process II) inorganic and organic peroxides, e.g. hydrogen peroxide, di-tert-butylperoxide, cumene hydroperoxide, dicyclohexylpercarbonate, tert-butylhydroperoxide, p-menthanehydroperoxide, azo initiators such as azobisisobutyronitrile, inorganic per-salts such as ammonium, sodium or potassium persulfate, potassium perphosphate, sodium perborate as well as redox systems can be taken into consideration as initiators of the emulsion polymerization of butadiene or a styrene-butadiene mixture. Redox systems generally consist of an organic oxidizing agent and a reducing agent, and additional heavy-metal ions can be present in the reaction medium (see Houben-Weyl, Methoden der Organischen Chemie, volume 14/1, pp. 263 - 297).

With respect to the at least one alkalipersulfate initiator used in process I) it can be referred to specifically to the above alkalipersulfates and also those mentioned in US2003/0139514 Thus in process I) in addition to the alkalipersulfate initiators other initiators can be used as mentioned in US2003/0139514 including actinic radiation, azo initiators and organic peroxides which may be activated to form a redox system, and the initiators as mentioned herein before. Moreover, salts, acids and bases can be used in the emulsion polymerization for producing the starting rubber latices. With acids and bases the pH value, with salts the viscosity of the latices is adjusted during the emulsion polymerisation. Examples for acids include sulfuric acid, hydrochloric acid, phosphoric acid; examples for bases include sodium hydroxide solution, potassium hydroxide solution; examples for salts include chlorides, sulfates, phosphates as sodium or potassium salts. The preferred base is sodium hydroxide solution and the preferred salt is tetrasodium pyrophosphate. The pH value of the fine-particle rubber latices is between pH 7 and pH 13, preferably between 8 and pH 12, particularly preferably between pH 9 and pH 12.

With respect to the optionally used salts it can be referred to in addition to those mentioned in US2003/0139514, which include for example alkali salts such as alkali halides, nitrates, sulfates, phosphates, pyrophosphates, preferably tetrasodium pyrophosphate, sodium sulfate, sodium chloride or potassium chloride. The amount of an optional salt may include 0 to 2, preferred 0 to 1 weight-percent relative to the latex solids.

Polymerization temperature in the preparation of the starting rubber latices is generally 25°C to 160°C, preferably

40°C to 90°C. Work can be carried out under the usual temperature control, e.g. isothermally. It is also possible to carry out polymerization in such a way that the temperature difference between the beginning and the end of the reaction is at least 2 °C, or at least 5°C, or at least 10°C starting with a lower temperature.

It is possible to first provide all substances used, i.e. water, monomers, emulsifiers, molecular-weight regulators, initiators, bases, acids and salts at the beginning of polymerization. Furthermore, it is also possible to first provide only a part of the substances used at the beginning of the polymerization, and to first provide other substances used only partially, and to feed the remaining part during the polymerization. It has proved to be advantageous to first provide only a part of the monomers and molecular-weight regulators up to 35% and to feed the largest part. Furthermore, it has proved advantageous to first provide the emulsifiers for the most part at least 65% or completely and to feed the remainder. Furthermore, it has proved advantageous to first provide the initiators, bases, acids and salts for the most part at least 65% or completely and to feed the remainder. Furthermore, it has proved advantageous to first provide water for the most part at least 50% or completely and to feed the remainder.

After the polymerization is finished the starting rubber latex can be cooled down to 50°C or lower and as far as the monomer conversion is not completed the not reacted monomers, e.g. butadiene can be removed by devolatilization at reduced pressure if necessary.

The starting rubber latices obtained in accordance with step a) of the process I) of the invention preferably have a weight average particle diameter Dw which is equal to or less than 110 nm, more preferably equal to or less than 100 nm and still more preferably equal to or less than 90 nm, or less than 85 nm.

The starting rubber latices obtained in accordance with step a) of the process II) of the invention preferably have a weight average particle diameter Dw of from 50 to less than 85 nm, preferably of from 55 to 84 nm, and particularly preferably of from 60 to 83 nm.

Determination of the weight average particle diameter $D_w$ can be carried out by a measurement with an ultracentrifuge (see W. Scholtan, H. Lange: Kolloid Z. u. Z. Polymere 250, pp. 782 to 796 (1972)) or a disc centrifuge DC 24000 by CPS Instruments Inc. at a rotational speed of the disc of 24,000 r.p.m.. The particle diameter can also be determined by static light scattering (see A. Schmidt in Houben-Weyl, Methoden der Organischen Chemie, Georg Thieme Verlag, Stuttgart, 1987, volume E20, pp. 238-248.) wherein with this method in opposite to the two first no information about the particles size distribution is obtained. For definition of the weight average particle size Dw see: G. Lagaly, O. Schulz, R. Ziemehl: Dispersionen und Emulsionen: eine Einführung in die Kolloidik feinferteilter Stoffe einschlieBlich der Tonminerale, Darmstadt: Steinkopf-Verlag 1997, ISBN 3-7985-1087-3, page 282, formula 8.3b. The definition of the weight average particle size diameter Dw according to this formula is the following:

$$D_W = \text{sum} ( n_i * D_i^4 ) / \text{sum} ( n_i * D_i^3 )$$

$n_i$: number of particles with the diameter $D_i$

The summation is performed from the smallest to largest diameter of the particles size distribution. It should be mentioned that for a particles size distribution of particles with the same density which is the case for the starting rubber latices and agglomerated rubber latices the volume average particle size diameter Dv is equal to the weight average particle size diameter Dw.

The gel content of the starting rubber latices is preferably 30 to 98% by wt., preferably 50 to 95% by wt. based on the water unsoluble solids of said latices. The values indicated for the gel content are based on the determination according to the wire cage method in toluene (see Houben-Weyl, Methoden der Organischen Chemie, Makromolekulare Stoffe, part 1, page 307 (1961) Thieme Verlag Stuttgart). The gel contents of the starting rubber latices can be adjusted in a manner known in principle by applying suitable reaction conditions (e.g., high reaction temperature and/or polymerization up to high conversion as well as, optionally, addition of substances with a cross-linking effect for achieving a high gel content, or, e.g., low reaction temperature and/or termination of the polymerization reaction prior to the occurrence of a cross-linkage that is too comprehensive as well as, optionally, addition of molecular-weight regulators such as, for example n-dodecylmercaptan or tert-dodecylmercaptan for achieving a low gel content).

The solid content of the starting rubber latices is preferably 25 to 55% by wt. (evaporation sample at 180°C for 25 min. in drying cabinet), more preferably 30 to 50% by wt., particularly preferably 35 to 45% by wt. The degree of conversion (calculated from the solid content of a sample and the mass of the substances used) of the monomers used in the emulsion polymerization preferably is larger than 50%, more preferably larger than 60%, particularly preferably larger than 70%, very particularly preferably larger than 80%, in each case based on the sum of monomers. Moreover, the degree of conversion of the monomers used is preferably lower than 99%, more preferably lower than 97%, particularly preferably lower than 96%, very particularly preferably lower than 95%, in each case based on the sum of monomers.

The agglomerated rubber latices according to the invention are obtained by agglomerating the starting rubber latices described herein above, which are obtained by using resin acid based-emulsifiers.

The weight average particle diameter Dw of the agglomerated rubber latices is preferably 150 to 2000 nm,

preferably 170 to 1200 nm, particularly preferably 180 to 1000 nm, and very particularly preferably 190 to 900 nm.

The solid content (evaporation sample at 180°C for 25 min. in drying cabinet) of the agglomerated rubber latices is preferably at least 15% by wt., more preferably at least 18% by wt., and particularly preferably at least 20% by wt. The solid content of the agglomerated rubber latices is preferably at most 50% by wt., more preferably at most 45% by wt., particularly preferably at most 40% by wt.

Production of the agglomerated rubber latices according to the invention is preferably carried out by mixing the starting rubber latices with an acid, preferably with an acid anhydride and still more preferably acetic anhydride, and after agglomeration is complete, preferably restabilization with a base preferably potassium hydroxide solution is carried out.

Preferably, acetic anhydride is used for agglomeration. However, other organic anhydrides can also be used. It is also possible to use mixtures of acetic anhydride with acetic acid or mixtures of organic anhydrides with acetic acid or other carboxylic acids.

Once the agglomeration is complete, the agglomerated rubber latex is preferably restabilized with potassium hydroxide solution, so that the result is a pH value of preferably more than pH 7.5. Other alkaline solutions, such as, e.g., sodium hydroxide solution, can be used, albeit this is less preferred. The pH value of the agglomerated rubber latices is preferably larger than pH 7.5, more preferably larger than pH 8, particularly preferably larger than pH 8.5 and very particularly preferably larger than pH 8.8.

In a preferred embodiment of the process of the invention first, the starting rubber latex is provided, wherein, in a preferred form, the solid content of the solid of this latex is adjusted to at most 50% by wt., more preferably at most 45% by wt, and particularly preferably at most 40% by wt. by the addition of water. The temperature of the starting rubber latex, optionally mixed with water, can be adjusted in a broad range of from 0°C to 70°C, preferably of from 10°C to 60°C, and particularly preferably of from 15°C to 50°C. Preferably at this temperature, a mixture of preferably acetic anhydride and water, which was prepared by mixing, is added to the starting rubber latex under good mixing. The addition of the acetic anhydride-water mixture and the mixing with the starting rubber latex should take place within a time span of two minutes at most in order to keep the coagulate formation as small as possible. In the process of the invention the coagulate formation cannot be avoided completely, but the amount of coagulate can be limited advantageously by this measure to significantly less than 1% by wt, generally to significantly less than 0.5% by wt based on the solids of the starting rubber latex used, which is thought to be a great advantage of the present invention.

Preferably the mixing ratio of the acetic anhydride-water mixture used in the agglomeration step is 1:5 to 1:50 parts by mass, preferably 1:7.5 to 1:40, particularly preferably 1:10 to 1:30. When the acetic anhydride-water mixture is added, agglomeration of the fine-particle rubber particles within the starting rubber latex to form larger rubber particles starts and is finished after 5 to 60 minutes according to the adjusted temperature. The rubber latex is not stirred or mixed in this phase. The agglomeration, the increase in size of the rubber particles, comes to a standstill when the entire amount of acetic anhydride is hydrolyzed and the pH value of the rubber latex does not drop any further. For restabilization, again preferably potassium hydroxide solution is carefully added to the rubber latex and mixed with the rubber latex, so that a pH value of the rubber latex of at least pH 7.5 results. Coagulate which has possibly formed is removed from the agglomerated rubber latex in particular by filtering (e.g. a filter with a mesh width of 50 μm).

Thus it is a preferred embodiment of the process according to the invention to carry out the agglomeration step b) by the addition of at least one acid, still more preferably by the addition of at least one acid anhydride. A particularly preferred acid anhydride is acetic acid anhydride, which is still more preferred used in admixture with water as described above.

In a further preferred embodiment of the process according to the invention the agglomeration step b) is carried out by the addition of 0.1 to 5 parts by weight of acetic acid anhydride per 100 parts of the starting rubber latex solids. The starting rubber latex solids means here a solid content of preferably 25 to 55% by wt. (evaporation sample at 180°C for 25 min. in drying cabinet), more preferably 30 to 50% by wt., particularly preferably 35 to 45% by wt..

In a further preferred embodiment of the process according to the invention the content of abietic acid or salts thereof in the resin acid-based emulsifiers is less than 1 % by weight, more preferably less than 0.5 % by weight based on the total weight of the resin acid-based emulsifiers.

The reason for this is as follows: The abietic acid or salts thereof inhibit or at least retard the polymerization of the starting rubber latex.

Furthermore the content of fatty acids in the resin acid-based emulsifiers is less than 1 % by weight, more preferably less than 0.5 % by weight based on the total weight of the resin acid-based emulsifiers.

The reason for this is as follows. Fatty acid emulsifiers have disadvantages in the grafting step for the production of graft rubber polymers because of the low critical micelle concentration (CMC) of fatty acid emulsifiers which allows the formation of new emulsifier micelles in which the grafting monomers could be polymerized instead of grafting onto the agglomerated rubber particles which is desired.

In the most preferred embodiment in the process according to the invention, step a) is carried out in the presence of only resin acid-based emulsifiers as soaps, i.e. no other emulsifiers are used.

In a further preferred embodiment in the process according to the invention the at least one starting rubber latex is obtained without using a seed latex.

The reason for this is as follows. The starting rubber latex can be produced without the use of an additional seed latex. Usually the use of a seed latex could only be justified if a specific rubber particles size and distribution of the rubber particles size is otherwise not achieved. Furthermore any additional step like the use of a seed latex reduces the economical benefit of the process according to the invention.

In a further preferred embodiment in the process according to the invention the starting rubber latex is obtained using an alkali persulfate initiator.

The reason for this is as follows. It is known that alkali persulfate initiator is suitable for rubber latices and it turned out that it is also suitable for the polymerization of the starting rubber latices.

In a further preferred embodiment of the process according to the invention the agglomerated rubber latex has a pH value at 20 °C of at least 7.5, preferably at least 8.0, particularly preferably 8.5 and very particularly preferably 8.8.

The reason for this is as follows. The rubber latex stability against shear stress is improved when the resin acid-based emulsifiers is neutralized, e.g. as potassium or sodium salt which is achieved with alkaline conditions.

In a further preferred embodiment of the process according to the invention the starting rubber latex has a solid content of 25 to 55 % by weight of the total weight of the starting rubber latex.

The reason for this is as follows. Lower solids contents than 25 % by weight are less economical and solids contents higher than 55 % by weight result in a latex viscosity which is too high.

In a further preferred embodiment of the process according to the invention the agglomerated rubber latex has a solid content of 15 to 50 % by weight preferably 18 to 45 % by weight, particulary preferably 20 to 40 % by weight of the total weight of the agglomerated rubber latex.

The reason for this is as follows. Lower solids contents are less economical and high solids contents result in a latex viscosity which is too high.

In a further preferred embodiment in the process according to the invention at least one starting latex is obtained by emulsion polymerisation of butadiene or a mixture of butadiene and styrene. Also one or more monomers - different from styrene - copolymerizable with butadiene can be used as comonomers. Up to 50 % by wt. (based on the total amount of monomers used for the production of polybutadiene polymers) of one or more monomers that are copolymerizable with butadiene can be used as comonomers. Examples for such monomers include isoprene, chloroprene, acrylonitrile, styrene, alpha-methylstyrene, $C_1$-$C_4$-alkylstyrenes, $C_1$-$C_8$-alkylacrylates, $C_1$-$C_8$-alkylmethacrylates, alkyleneglycol diacrylates, alkylenglycol dimethacrylates, divinylbenzol; preferably, butadiene is used alone or mixed with up to 20% by wt., preferably 15% by wt. styrene and/or acrylonitrile.

In a further preferred embodiment the process according to the invention comprises the step of adding at least one base after the agglomeration step b).

The preferred base to be used in such step is potassium hydroxide solution.

In a further preferred embodiment of the process according to the invention the amount of coagulate formed during the agglomeration step is less than 1 % by weight, preferably less than 0.5 % by weight of the total weight of the starting rubber latex solids.

In accordance with the present invention there is thus further provided an agglomerated rubber latex that is obtainable by the process according to the invention.

In accordance with the present invention there is thus further provided the use of the agglomerated rubber latices according to the invention for the production of graft rubber polymers and also a process for producing graft rubber polymers comprising the polymerization of the at least one unsaturated monomer in the presence of the agglomerated rubber latices according to the invention. In accordance with the present invention there are further provided graft rubber polymers that are obtainable from such process of claim, and that comprise the agglomerated rubber particles obtained from the agglomerated rubber latices according to the invention.

The present invention furthermore provides the use of the graft rubber polymers obtainable according to the invention for the manufacture of thermoplastic molding compositions, in particular, for the manufacture of ABS and/or blends of ABS with at least one thermoplastic polymer, which is preferably selected from polyamide, polycarbonate, polyester etc.. Thus the present invention furthermore provides thermoplastic polymer composition, comprising the graft rubber polymers obtainable according to the invention and at least one thermoplastic polymer, which again is selected preferably from rubber-free copolymers, polyamides, polycarbonates, polyester etc..

The preparation of the graft rubber polymers obtainable according to the invention (sometimes also called graft rubber polymer I)) may be carried out, as desired, by grafting of the agglomerated rubber latex or by the common grafting of a mixture of the agglomerated rubber latices during one reaction. The graft polymerization(s) may be carried out according to any desired processes; it/they is/are preferably so carried out that the monomer mixture is added continuously to the agglomerated rubber latex or to a mixture of the agglomerated rubber latices, and polymerization is carried out.

Particular monomer/rubber ratios are preferably maintained, and the monomers are added to the rubber in a known manner: In order to produce graft rubber polymers according to the invention (sometimes designated with "I)",

preferably from 15 to 60 parts by weight, particularly preferably from 20 to 50 parts by weight, of a mixture of styrene and acrylonitrile, which may optionally contain up to 50 wt. % (based on the total amount of monomers used in the graft polymerization) of one or more comonomers, are polymerized in the presence of preferably from 40 to 85 parts by weight, particularly preferably from 50 to 80 parts by weight (in each case based on solid), of the agglomerated rubber latex or of a mixture of agglomerated rubber latices. The monomers used in the graft polymerization are preferably mixtures of styrene and acrylonitrile in a weight ratio of from 95:5 to 50:50, particularly preferably in a weight ratio of from 80:20 to 65:35, it being possible for styrene and/or acrylonitrile to be replaced partially by copolymerizable monomers, preferably by alpha-methylstyrene, methyl methacrylate, maleic anhydride or N-phenylmaleimide. In principle, any desired further copolymerizable vinyl monomers may additionally be used concomitantly in amounts of up to preferably approximately 10 wt. % (based on the total amount of monomers).

Molecular-weight regulators may additionally be used in the graft polymerization, preferably in amounts of from 0.01 to 2 wt. %, particularly preferably in amounts of from 0.05 to 1 wt. % (in each case based on the total amount of monomers in the graft polymerization step). Suitable molecular-weight regulators are, for example, alkylmercaptans, such as n-dodecylmercaptan, tert-dodecylmercaptan, dimeric alpha-methylstyrene, terpinols.

Included as initiators are inorganic and organic peroxides, for example hydrogen peroxide, di-tert-butyl peroxide, cumene hydroperoxide, dicyclohexyl percarbonate, tert-butyl hydroperoxide, p-menthane hydroperoxide, azo initiators such as azobisisobutyronitrile, inorganic per-salts such as ammonium, sodium or potassium persulfate, potassium perphosphate, sodium perborate, as well as redox systems. Redox systems generally consist of an organic oxidising agent and a reducing agent, it being possible for heavy metal ions additionally to be present in the reaction medium (see Houben-Weyl, Methoden der Organischen Chemie, Volume 14/1, p. 263 to 297).

In the grafting step as emulsifier there may be used conventional anionic emulsifiers such as alkyl sulfates, alkyl sulfonates, aralkyl sulfonates, soaps of saturated or unsaturated fatty acids as well as above mentioned resin acid-based emulsifiers or tall resin emulsifiers. It is also possible in principle to use emulsifiers having carboxyl groups (e.g. salts of $C_{10}$-$C_{18}$ fatty acids, emulsifiers according to DE-A 36 39 904 and DE-A 39 13 509). Resin acid-based emulsifiers or tall resin emulsifier are used preferably.

The polymerization temperature is generally from 25°C to 160°C, preferably from 40°C to 90°C. The operation may be carried out with conventional temperature management, for example isothermally; however, the graft polymerization is preferably carried out in such a manner that the temperature difference between the beginning and the end of the reaction is at least 10°C, preferably at least 15°C and particularly preferably at least 20°C, starting at lower temperatures.

In order to produce the graft rubber polymers according to the invention, the graft polymerization may preferably be carried out by feeding in the monomers in such a manner that from 55 to 90 wt. %, preferably from 60 to 80 wt. % and particularly preferably from 65 to 75 wt. %, of the total monomers to be used in the graft polymerization are metered in in the first half of the total monomer metering time; the remaining amount of monomers is metered in in the second half of the total monomer metering time. It is also possible to provide first up to 30 wt. % of the total monomers together with the agglomerated rubber latex or mixtures of agglomerated rubber latices and to feed the remaining amount of monomers continuously or in the above described manner.

The work-up of the graft rubber polymers is carried out by common procedures, e.g. by coagulation with salts, e.g. Epsom salt and/or acids, washing, drying or by spray drying.

Rubber-free polymers or copolymers (sometimes designated "polymers or copolymers II)") to be mixed with graft rubber polymers prepared according to the invention preferably include copolymers of styrene and acrylonitrile in a weight ratio of from 95:5 to 50:50, it being possible for styrene and/or acrylonitrile to be replaced partially by alpha-methylstyrene, methyl methacrylate, maleic anhydride or N-phenylmaleimide. Particular preference is given to copolymers II) having contents of incorporated acrylonitrile units <30 wt. %. Such copolymers preferably have weight average molecular weights $M_w$ of from 20,000 to 200,000 g/mol and limiting viscosities [$\eta$] of from 20 to 110 mL/g (measured in dimethylformamide at 25°C). Details relating to the preparation of such resins are described, for example, in DE-A 2 420 358 and DE-A 2 724 360. Such vinyl resins prepared by mass or solution polymerization have proved to be particularly suitable. The copolymers may be added alone or in any desired mixture.

In general, the polymer compositions according to the invention may contain the graft rubber components I) in amounts of from 1 to 90 parts by weight, preferably from 5 to 50 parts by weight, and the rubber-free resin component II), preferably a copolymer of styrene and acrylonitrile in amounts of from 10 to 99 parts by weight, preferably from 50 to 95 parts by weight.

In addition to the mentioned polymer components I) and II), these polymer compositions according to the invention may contain further rubber-free thermoplastic resins not composed of vinyl monomers, such thermoplastic resins being used in amounts of up to 1000 parts by weight, preferably up to 700 parts by weight and particularly preferably up to 500 parts by weight (in each case based on 100 parts by weight of the total of I) + II).

The thermoplastic resins as the rubber-free copolymer in the molding compositions according to the invention which are used in addition to the mentioned polymer components I) and II), include for example polycondensation

products, for example aromatic polycarbonates, aromatic polyester carbonates, polyesters, polyamides.

Suitable thermoplastic polycarbonates and polyester carbonates are known (see, for example, DE-A 1 495 626, DE-A 2 232 877, DE-A 2 703 376, DE-A 2 714 544, DE-A 3 000 610, DE-A 3 832 396, DE-A 3 077 934), for example which may be prepared by reaction of diphenols of formulae (III) and (IV)

(III) 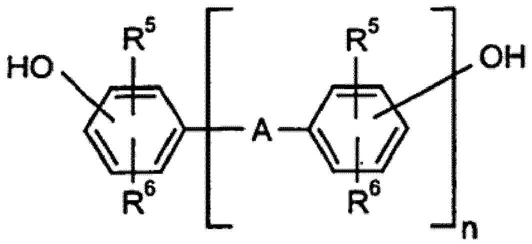

(IV) 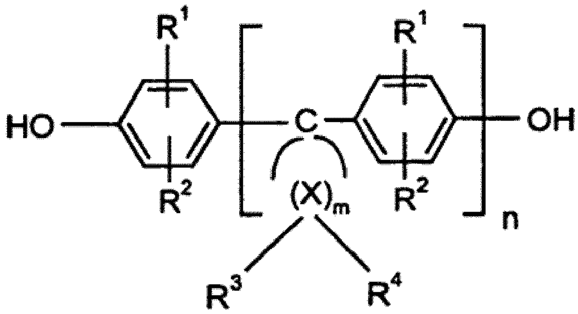

wherein

A is a single bond, $C_1$-$C_5$-alkylene, $C_2$-$C_5$-alkylidene, $C_5$-$C_6$-cycloalkylidene, -O-, -S-, -SO-, $-SO_2-$ or-CO-,
$R^5$ and $R^6$ each independently of the other represents hydrogen, methyl or halogen, especially hydrogen, methyl, chlorine or bromine,
$R^1$ and $R^2$ each independently of the other represents hydrogen, halogen, preferably chlorine or bromine, $C_1$-$C_8$-alkyl, preferably methyl, ethyl, $C_5$-$C_6$-cycloalkyl, preferably cyclohexyl, $C_6$-$C_{10}$-aryl, preferably phenyl, or $C_7$-$C_{12}$-aralkyl, preferably phenyl-$C_1$-$C_4$-alkyl, especially benzyl,
m is an integer from 4 to 7, preferably 4 or 5,
n is 0 or 1,
$R^3$ and $R^4$ is selected individually for each X and each independently of the other represents hydrogen or $C_1$-$C_6$-alkyl, and
X represents carbon,
with carbonic acid halides, preferably phosgene, and/or with aromatic dicarboxylic acid dihalides, preferably benzenedicarboxylic acid dihalides, by interfacial polycondensation, or with phosgene by polycondensation in homogeneous phase (the so-called pyridine process), wherein the molecular weight may be adjusted in a known manner by an appropriate amount of known chain terminators. Suitable diphenols of formulae (III) and (IV) are, for example, hydroquinone, resorcinol, 4,4'-dihydroxydiphenyl, 2,2-bis-(4-hydroxyphenyl)-propane, 2,4-bis-(4-hydroxyphenyl)-2-methylbutane, 2,2-bis-(4-hydroxy-3,5-dimethylphenyl)-propane, 2,2-bis-(4-hydroxy-3,5-dichlorophenyl)-propane, 2,2-bis-(4-hydroxy-3,5-dibromophenyl)-propane, 1,1-bis-(4-hydroxyphenyl)-cyclohexane, 1,1-bis-(4-hydroxyphenyl)-3,3,5-trimethylcyclohexane, 1,1-bis-(4-hydroxyphenyl)-3,3-dimethylcyclohexane, 1,1-bis-(4-hydroxyphenyl)-3,3,5,5-tetramethylcyclohexane or 1,1-bis-(4-hydroxyphenyl)-2,4,4-trimethylcyclopentane. Preferred diphenols of formula (III) are 2,2-bis-(4-hydroxyphenyl)-propane and 1,1-bis-(4-hydroxyphenyl)-cyclohexane, and the preferred phenol of formula (IV) is 1,1-bis-(4-hydroxyphenyl)-3,3,5-trimethylcyclohexane. It is also possible to use mixtures of diphenols.

Suitable chain terminators are, for example, phenol, p-tert-butylphenol, long-chain alkylphenols such as 4-(1,3-tetramethylbutyl)phenol according to DE-A 2 842 005, monoalkylphenols, dialkylphenols having a total of from 8 to 20 carbon atoms in the alkyl substituents according to DE-A 3 506 472, such as p-nonylphenol, 2,5-di-tert-butylphenol, p-tert-octylphenol, p-dodecylphenol, 2-(3,5-dimethylheptyl)-phenol and 4-(3,5-dimethylheptyl)-phenol. The amount of chain terminators required is generally from 0.5 to 10 mol %, based on the sum of the diphenols (III) and (IV).

The polycarbonates or polyester carbonates that are suitable may be linear or branched; branched products are preferably obtained by incorporation of from 0.05 to 2.0 mol %, based on the sum of the diphenols used, of compounds having a functionality of three or more than three, for example compounds having three or more than three phenolic OH groups.

The polycarbonates or polyester carbonates that are suitable may contain aromatically bonded halogen, preferably bromine and/or chlorine; preferably, they are halogen-free. They have molecular weights ($M_w$, weight average), determined, for example, by ultracentrifugation or scattered light measurement, of from 10,000 to 200,000, preferably from 20,000 to 80,000 g/mol.

Suitable thermoplastic polyesters are preferably polyalkylene terephthalates, that is to say reaction products of aromatic dicarboxylic acids or reactive derivatives thereof (e.g. dimethyl esters or anhydrides) and aliphatic, cycloaliphatic or arylaliphatic diols, and mixtures of such reaction products. Preferred polyalkylene terephthalates may be prepared from terephthalic acids (or reactive derivatives thereof) and aliphatic or cycloaliphatic diols having from 2 to 10 carbon atoms according to known methods (Kunststoff-Handbuch, Volume VIII, p. 695 ff, Carl Hanser Verlag, Munich 1973).

In preferred polyalkylene terephthalates, from 80 to 100 mol %, preferably from 90 to 100 mol %, of the dicarboxylic acid radicals are terephthalic acid radicals, and from 80 to 100 mol %, preferably from 90 to 100 mol %, of the diol radicals are ethylene glycol and/or 1,4-butanediol radicals. The preferred polyalkylene terephthalates may contain, in addition to ethylene glycol or 1,4-butanediol radicals, from 0 to 20 mol % of radicals of other aliphatic diols having from 3 to 12 carbon atoms or cycloaliphatic diols having from 6 to 12 carbon atoms, for example radicals of 1,3-propanediol, 2-ethyl-1,3-propanediol, neopentyl glycol, 1,5-pentanediol, 1,6-hexanediol, 1,4-cyclohexanedimethanol, 3-methyl-1,3- and -1,6-pentanediol, 2-ethyl-1,3-hexanediol, 2,2-diethyl-1,3-propanediol, 2,5-hexanediol, 1,4-di(β-hydroxyethoxy)-benzene, 2,2(bis-4-hydroxycyclohexyl)-propane, 2,4-dihydroxy-1,1,3,3-tetramethylcyclobutane, 2,2-bis-(3-β-hydroxyethoxyphenyl)-propane and 2,2-bis-(4-hydroxypropoxyphenyl)-propane (DE-A 2 407 647, 2 407 776, 2 715 932).

The polyalkylene terephthalates may be branched by incorporation of relatively small amounts of tri- or tetrahydric alcohols or tri- or tetra-basic carboxylic acids, such as are described in DE-A 1 900 270 and U.S. Pat. No. 3,692,744. Examples of preferred branching agents are trimesic acid, trimellitic acid, trimethylol-ethane and -propane and pentaerythritol. It is advisable to use not more than 1 mol % of the branching agent, based on the acid component. Particular preference is given to polyalkylene terephthalates that have been prepared solely from terephthalic acid and reactive derivatives thereof (e.g. dialkyl esters thereof) and ethylene glycol and/or 1,4-butanediol, and mixtures of such polyalkylene terephthalates.

Preferred polyalkylene terephthalates are also copolyesters prepared from at least two of the above-mentioned alcohol components: particularly preferred copolyesters are poly-(ethylene glycol 1,4-butanediol) terephthalates.

The polyalkylene terephthalates that are preferably suitable generally have an intrinsic viscosity of from 0.4 to 1.5 dL/g, preferably from 0.5 to 1.3 dL/g, especially from 0.6 to 1.2 dL/g, in each case measured in phenol/o-dichlorobenzene (1:1 parts by weight) at 25°C.

Suitable polyamides are known homopolyamides, copolyamides and mixtures of such polyamides. They may be semi-crystalline and/or amorphous polyamides.

Suitable semi-crystalline polyamides are polyamide-6, polyamide-6,6, mixtures and corresponding copolymers of those components. Also included are semi-crystalline polyamides the acid component of which consists wholly or partially of terephthalic acid and/or isophthalic acid and/or suberic acid and/or sebacic acid and/or azelaic acid and/or adipic acid and/or cyclohexanedicarboxylic acid, the diamine component of which consists wholly or partially of m- and/or p-xylylene-diamine and/or hexamethylenediamine and/or 2,2,4-trimethylhexamethylenediamine and/or 2,2,4-trimethylhexamethylenediamine and/or isophoronediamine, and the composition of which is in principle known.

Mention may also be made of polyamides that are prepared wholly or partially from lactams having from 7 to 12 carbon atoms in the ring, optionally with the concomitant use of one or more of the above-mentioned starting components.

Particularly preferred semi-crystalline polyamides are polyamide-6 and polyamide-6,6 and mixtures thereof. Known products may be used as amorphous polyamides. They are obtained by polycondensation of diamines, such as ethylenediamine, hexamethylenediamine, decamethylenediamine, 2,2,4- and/or 2,4,4-trimethylhexamethylenediamine, m- and/or p-xylylene-diamine, bis-(4-aminocyclohexyl)-methane, bis-(4-aminocyclohexyl)-propane, 3,3'-dimethyl-4,4'-diamino-dicyclohexylmethane, 3-aminomethyl-3,5,5-trimethylcyclohexylamine, 2,5- and/or 2,6-bis-(aminomethyl)-norbornane and/or 1,4-diaminomethylcyclohexane, with dicarboxylic acids such as oxalic acid, adipic acid, azelaic acid, azelaic acid, decanedicarboxylic acid, heptadecanedicarboxylic acid, 2,2,4- and/or 2,4,4-trimethyladipic acid, isophthalic acid and terephthalic acid.

Also suitable are copolymers obtained by polycondensation of a plurality of monomers, as well as copolymers prepared with the addition of aminocarboxylic acids such as ε-aminocaproic acid, ω-aminoundecanoic acid or ω-aminolauric acid or their lactams.

Particularly suitable amorphous polyamides are the polyamides prepared from isophthalic acid, hexamethylenediamine and further diamines such as 4,4'-diaminodicyclohexylmethane, isophoronediamine, 2,2,4- and/or 2,4,4-trimethylhexamethylenediamine, 2,5- and/or 2,6-bis-(aminomethyl)-norbornene; or from isophthalic acid, 4,4'-diamino-dicyclohexylmethane and ε-caprolactam; or from isophthalic acid, 3,3'-dimethyl-4,4'-diamino-dicyclohexylmethane and laurinlactam; or from terephthalic acid and the isomeric mixture of 2,2,4- and/or 2,4,4-trimethylhexamethylenediamine.

Instead of pure 4,4'-diaminodicyclohexylmethane it is also possible to use mixtures of the position-isomeric diaminodicyclohexylmethanes, which are composed of from 70 to 99 mol % of the 4,4'-diamino isomer, from 1 to 30 mol % of the 2,4'-diamino isomer, from 0 to 2 mol % of the 2,2'-diamino isomer and optionally corresponding to more highly condensed diamines, which are obtained by hydrogenation of industrial grade diaminodiphenylmethane. Up to 30% of the isophthalic acid may be replaced by terephthalic acid.

The polyamides preferably have a relative viscosity (measured on a 1 wt. % solution in m-cresol or 1 % (weight/volume) solution in 96 wt. % sulfuric acid at 25°C) of from 2.0 to 5.0, particularly preferably from 2.5 to 4.0.

The molding compositions according to the invention are produced by mixing graft rubber components I) according to the invention and the polymer component II) and, optionally, further polymers and conventional additives in conventional mixing apparatuses (preferably in multi-cylinder mills, mixing extruders or internal kneaders).

Accordingly, the invention also provides a process for the production of the molding compositions according to the invention, wherein components I) and II) and, optionally, further polymers and conventional additives are mixed and compounded and extruded at elevated temperature, generally at temperatures of from 150°C to 300°C. During the production, working up, further processing and final shaping, the required or useful additives can be added to the thermoplastic molding materials, e.g. antioxidants, UV stabilizers, peroxide destroyers, antistatics, lubricants, release agents, flame retarding agents, fillers or reinforcing agents (glass fibers, carbon fibers, etc.) as well as colorants. The final shaping can be carried out on commercially available processing machines, and comprises, for example, injection-molding processing, plate extrusion with optionally subsequent hot forming, cold forming, extrusion of tubes and profiles and calender processing.

## Examples

For measuring the weight average particle size Dw with the disc centrifuge DC 24000 by CPS

Instruments Inc. equipped with a low density disc, an aqueous sugar solution of 17.1 mL with a density gradient of 8 to 20% by wt. of saccharose in the centrifuge disc was used, in order to achieve a stable flotation behavior of the particles. A polybutadiene latex with a narrow distribution and a mean particle size of 405 nm was used for calibration. The measurements were carried out at a rotational speed of the disc of 24,000 r.p.m. by injecting 0.1 mL of a diluted rubber dispersion into an aqueous 24% by wt. saccharose solution. The calculation of the weight average particle size Dw was performed by means of the Mie theory.

## Fine-particle butadiene rubber latices (B)

The fine-particle butadiene rubber latices (B) which are used for the agglomeration step were produced by emulsion polymerization using tert-dodecylmercaptan as chain transfer agent and potassium persulfate as initiator at temperatures from 60° to 80°C. The addition of potassium persulfate marked the beginning of the polymerization. Finally the fine-particle butadiene rubber latices (B) are cooled below 50°C and the non reacted monomers were removed partially under vacuum (200 to 500 mbar) at temperatures below 50°C which defines the end of the polymerization. Then the latex solids (in % per weight) are determined by evaporation of a sample at 180°C for 25 min. in a drying cabinet. The monomer conversion is calculated from the measured latex solids.

In particular the butadiene rubber latices (B) are characterized by the following parameters, see table 1.

### Latex B1

No seed latex is used. As emulsifier the potassium salt of a disproportionated rosin (amount of potassium dehydroabietate: 52 wt.-%, potassium abietate: 0 wt.-%) and as salt tetrasodium pyrophosphate is used.

### Latex B2 (comparison example)

No seed latex is used. As emulsifier the potassium salt of a fatty acid mixture containing basically stearic acid, palmitic acid and oleic acid in the ratio 28 : 30 : 28 (the remaining amounts are: C12 to C20 fatty acids, which are saturated or unsaturated) and as salt tetrasodium pyrophosphate is used.

Latex B3 (comparison example)

A butadiene rubber seed latex with a weight average particle diameter Dw of 47 nm is used. As emulsifier the potassium salt of a disproportionated rosin (amount of potassium dehydroabietate: 52 wt.-%, potassium abietate: 0 wt.-%) and as salt sodium sulfate is used.

Latex B4 (comparison example)

A butadiene rubber seed latex with a weight average particle diameter Dw of 47 nm is used. As emulsifier the potassium salt of a disproportionated rosin (amount of potassium dehydroabietate: 52 wt.-%, potassium abietate: 0 wt.-%) and as salt sodium sulfate is used.

Latex B5

A butadiene rubber seed latex with a weight average particle diameter Dw of 55 nm is used. As emulsifier the potassium salt of a disproportionated rosin (amount of potassium dehydroabietate: 52 wt.-%, potassium abietate: 0 wt.-%) and as salt tetra sodium pyrophosphate is used.

Latex B6

No seed latex is used. As emulsifier the potassium salt of a disproportionated rosin (amount of potassium dehydroabietate: 52 wt.-%, potassium abietate: 0 wt.-%) and as salt tetrasodium pyrophosphate is used.

Table 1: Composition of the butadiene rubber latices B1 to B6

| Latex | B1 | B2 | B3 | B4 | B5 | B6 |
|---|---|---|---|---|---|---|
| Monomer butadiene / styrene | 90/10 | 90/10 | 100/0 | 100/0 | 90/10 | 90/10 |
| Seed latex [wt.-% based on monomers] | ./. | ./. | 5.27 | 5.27 | 5.27 | ./. |
| Emulsifier [wt.-% based on monomers] | 2.80 | 3.62 | 1.34 | 1.34 | 2.80 | 2.80 |
| Potassium persulfate [wt.-% based on monomers] | 0.10 | 0.15 | 0.10 | 0.10 | 0.10 | 0.10 |
| Decomposed potassium persulfate [parts per 100 parts latex solids] | 0.043 | 0.129 | 0.066 | 0.066 | 0.053 | 0.068 |
| Salt [wt.-% based on monomers] | 0.559 | 0.800 | 0.200 | 0.499 | 0.559 | 0.559 |
| Salt amount in percent relative to the weight of solids of the rubber latex | 0.614 | 0.839 | 0.200 | 0.498 | 0.578 | 0.598 |
| Monomer conversion [%] | 87.1 | 90.5 | 92.4 | 92.4 | 87.4 | 89.3 |
| $D_w$ [nm] | 75 | 64 | 120 | 120 | 100 | 87 |
| pH | 9.9 | 12.2 | 11.3 | 11.3 | 9.5 | 10.6 |
| Latex solids content [wt.-%] | 39.4 | 40.6 | 40.1 | 39.1 | 40.2 | 42.6 |
| K [nm] | 0.43 | -1.36 | 5.54 | 2.32 | 0.97 | 0.91 |

$$K = W * ( 1 - 1.4 * S ) * D_W$$

W = decomposed potassium persulfate [parts per 100 parts rubber]
S = salt amount in percent relative to the weight of solids of the rubber latex
Dw = weight average particle size of the fine-particle butadiene rubber latices (B)

Production of the coarse-particle, agglomerated butadiene rubber latices (A)

The production of the coarse-particle, agglomerated butadiene rubber latices (A) are performed with the specified amounts mentioned in table 2. The fine-particle butadiene rubber latices (B) are being provided first at 25°C and

are adjusted if necessary with deionized water to a certain concentration and stirred. To this dispersion an amount of acetic anhydride based on 100 parts of the solids from the fine-particle butadiene rubber latex (B) as fresh produced aqueous mixture with a concentration of 4.58 wt.-% is added and the total mixture is stirred for 60 seconds. After this the agglomeration is carried out for 30 minutes without stirring. Subsequently KOH is added as a 3 to 5 wt.-% aqueous solution to the agglomerated latex and mixed by stirring. After filtration through a 50 μm filter the amount of coagulate as solid mass based on 100 parts solids of the fine-particle butadiene rubber latex (B) is determined. The solid content of the agglomerated butadiene rubber latex (A), the pH value und the weight average particle diameter Dw is determined.

The coarse-particle, agglomerated butadiene rubber latices A11 to A14 according to the invention which are produced without seed latex and with the use of rosin soap are characterized in opposite to A21 und A22 (production without seed latex and with the use of fatty acid emulsifiers) thereby, that considerable less amount of acetic anhydride is necessary for a particular particle size Dw.

The agglomerated butadiene rubber latices A31, A32 und particularly A41 und A42 (production with seed latex and the use of rosin soap according to US 2003/0139514 A1) have the disadvantage compared to the coarse-particle, agglomerated butadiene rubber latices A11 to A14 according to the invention, that considerable higher amounts of coagulate are formed during their production.

Table 2: Production of the coarse-particle, agglomerated butadiene rubber latices (A)

| latex (A) | | A11 | A12 | A13 | A14 | A21 | A22 | A31 | A32 | A41 | A42 | A51 | A52 | A53 | A54 | A61 | A62 |
|---|---|---|---|---|---|---|---|---|---|---|---|---|---|---|---|---|---|
| | | according to the invention | | | | comparative examples | | | | | | according to the invention | | | | | |
| used latex (B) | | B1 | B1 | B1 | B1 | B2 | B2 | B3 | B3 | B4 | B4 | B5 | B5 | B5 | B5 | B6 | B6 |
| concentration latex (B) before agglomeration | wt.-% | 35.6 | 35.6 | 35.6 | 32.6 | 35.6 | 32.6 | 40.1 | 40.1 | 39.1 | 39.1 | 35.3 | 35.3 | 35.3 | 32.3 | 37.4 | 37.4 |
| amount acetic anhydride | parts | 0.91 | 0.87 | 0.94 | 1.24 | 1.29 | 2.16 | 0.39 | 0.84 | 0.30 | 0.40 | 0.88 | 0.86 | 0.89 | 1.10 | 0.90 | 0.91 |
| amount KOH | parts | 0.92 | 0.82 | 0.95 | 1.10 | 1.07 | 1.91 | 0.41 | 0.85 | 0.30 | 0.39 | 0.82 | 0.76 | 0.77 | 0.94 | 0.81 | 0.82 |
| concentration KOH solution | wt.-% | 3 | 3 | 3 | 3 | 3 | 3 | 5 | 5 | 5 | 5 | 3 | 3 | 3 | 3 | 3 | 3 |
| solid content latex (A) | wt.-% | 30.7 | 31.0 | 30.5 | 28.6 | 29.6 | 24.7 | 38.2 | 36.2 | 37.5 | 37.2 | 30.8 | 31.0 | 31.0 | 28.4 | 32.5 | 32.5 |
| coagulate | parts | 0.20 | 0.41 | 0.34 | 0.02 | 0.02 | 0.03 | 0.95 | 0.84 | 1.39 | 2.13 | 0.88 | 0.01 | 0.09 | 0.05 | 0.01 | 0.00 |
| pH | | 9.0 | 9.0 | 9.0 | 9.1 | 9.0 | 9.0 | 9.5 | 10.4 | 8.7 | 9.1 | 9.0 | 9.0 | 9.0 | 9.1 | 9.0 | 9.0 |
| Dw | nm | 293 | 265 | 338 | 645 | 218 | 661 | 279 | 679 | 196 | 375 | 295 | 273 | 315 | 605 | 315 | 328 |

Production of the graft rubber polymers (I)

59.5 wt.-parts of mixtures of the coarse-particle, agglomerated butadiene rubber latices (A) (calculated as solids of the rubber latices (A)) are diluted with water to a solid content of 27.5 wt.-% and heated to 55°C. 40.5 wt.-parts of a mixture consisting of 72 wt.-parts styrene, 28 wt.-parts acrylonitrile and 0.4 wt.-parts tert-dodecylmercaptan is added in 3 hours 30 minutes. At the same time when the monomer feed starts the polymerization is started by feeding 0.15 wt.-parts cumene hydroperoxide together with 0.57 wt.-parts of a potassium salt of disproportionated rosin (amount of potassium dehydroabietate: 52 wt.-%, potassium abietate: 0 wt.-%) as aqueous solution and seperately an aqueous solution of 0.22 wt.-parts of glucose, 0.36 wt.-% of tetrasodium pyrophosphate and 0.005 wt.-% of iron-(II)-sulfate within 3 hours 30 minutes. The temperature is increased from 55 to 75°C within 3 hours 30 minutes after start feeding the monomers. The polymerization is carried out for further 2 hours at 75°C and then the graft rubber latex is cooled to ambient temperature. The graft rubber latex is stabilized with ca. 0.6 wt.-parts of a phenolic antioxidant and precipitated with sulfuric acid, washed with water and the wet graft powder is dried at 70°C (residual humidity less than 0.5 wt.-%).

Graft rubber polymer 11

The coarse-particle, agglomerated butadiene rubber latices A11, A12, A13 and A14 are used in the ratio 35:25:32:8 (calculated as solids of rubber latices (A)).

Graft rubber polymer I2 (comparative example)

The coarse-particle, agglomerated butadiene rubber latices A21 and A22 are used in the ratio 74:26 (calculated as solids of the latices (A)).

Graft rubber polymer I3 (comparative example)

The coarse-particle, agglomerated butadiene rubber latices A31 and A32 are used in the ratio 82:18 (calculated as solids of the rubber latices (A)).

Graft rubber polymer I4

The coarse-particle, agglomerated butadiene rubber latices A51 to A54 are used in the ratio 38 : 38 : 19 : 5 (calculated as solids of the rubber latices (A)).

Graft rubber polymer I5

The coarse-particle, agglomerated butadiene rubber latices A61 and A62 are used in the ratio 50 : 50 (calculated as solids of the rubber latices (A)).

Thermoplastic Resin (II)

Resin 1

Statistical copolymer from styrene and acrylonitrile with a ratio of polymerized styrene to acrylonitrile of 72:28 with a weight average molecular weight $M_w$ of ca. 115,000 g/mol, a polydispersity of $M_w/M_n$ < 3 and a melt flow rate (MVR) at 220°C/10kg of 55 mL/10 mintues, produced by free radical solution polymerization.

Resin 2

Statistical copolymer from styrene and acrylonitrile with a ratio of polymerized styrene to acrylonitrile of 76.5:23.5 with a weight average molecular weight $M_w$ of ca. 145,000 g/mol, a polydispersity of $M_w/M_n$ < 3 and a melt flow rate (MVR) at 220°C/10kg of 40 mL/10 mintues, produced by free radical solution polymerization.

Resin 3

Statistical copolymer from styrene and acrylonitrile with a ratio of polymerized styrene to acrylonitrile of 72:28 with a weight average molecular weight $M_w$ of ca. 185,000 g/mol, a polydispersity of $M_w/M_n$ < 3 and a melt flow rate (MVR) at 220°C/10kg of 10 mL/10 mintues, produced by free radical solution polymerization.

Resin 4

Statistical terpolymer from styrene, acrylonitrile and maleic anhydride with a ratio of polymerized styrene to acrylonitrile to maleic anhydride of 66.4:32.5:1.1 with a melt flow index (MI) at 230°C/3.8kg of 8.5 g/10 mintues, produced by free radical solution polymerization.

Resin 5

Polycarbonate based on bisphenol A with a weight average molecular weight of 27,500 g/mol (measured by GPC in methylene chloride at 25°C).

Resin 6

Polyamide-6 with a viscosity number of 130 - 160 mL/g (0.5% [weight/volume] in 96 wt. % sulfuric acid, according to ISO 307).

Thermoplastic compositions

ABS thermoplastic compositions C1 to C5

The graft rubber polymers (I) according to table 3, resin 1, ethylenediamine bisstearylamide, magnesium stearate and silicon oil were blended in a ratio of 28 : 72 : 2 : 0.3 : 0.15 wt.-parts on a twin-screw extruder at 240°C, pelletized and ISO test bars were injection moulded. Test results are presented in table 3.

PC/ABS thermoplastic compositions D1 to D5

The graft rubber polymers (I) according to table 4, resin 2, resin 5, pentaerythriol tetrastearate, stabilizer Irganox® B900 and stabilizer Irganox® 1076 were blended in a ratio of 25.5 : 31.5 : 43 : 0.75 : 0.12 : 0.10 wt.-parts on a twin-screw extruder at 260°C, pelletized and ISO test bars were injection moulded. Test results are presented in table 4.

Polyamide-6/ABS thermoplastic compositions E1 to E4

The graft rubber polymers (I) according to table 5, resin 1, resin 3, resin 4, resin 6, stabilizer Irganox® 1076 and stabilizer Irganox® PS802 were blended in a ratio of 34 : 5.3 : 7.7 : 6 : 47 : 1 : 0.5 wt.-parts on a twin-screw extruder at 260°C, pelletized and ISO test bars were injection moulded. Test results are presented in table 5.

The following tests were performed with the thermoplastic resins: melt volume rate MVR [mL/10 min] according to ISO 1133, ball indentation (Hc) [N/mm$^2$] according to ISO 2039-1 (test load 358 N, test duration 30 sec.), unnotched Izod impact strength [kJ/m$^2$] according to ISO 180-1U at different temperatures, notched Izod impact strength [kJ/m$^2$] according to ISO 180-1A at different temperatures, vicat softening temperatures B/120 (50N, 120°C/h) and A/120 (10 N, 120°C/h) [°C] according to ISO 306.

Table 3: ABS thermoplastic compositions C1 to C5

| ABS thermoplastic composition | | C1 | C2 | C3 | C4 | C5 |
|---|---|---|---|---|---|---|
| | | | comparison | | | |
| graft rubber polymer | | I1 | I2 | I3 | I4 | I5 |
| notched Izod impact strength | | | | | | |
| 23°C | [kJ/m$^2$] | 20.2 | 12.8 | 22.3 | 20.7 | 28.1 |
| -10°C | [kJ/m$^2$] | 11.0 | 8.1 | 14.1 | 10.5 | 15.8 |
| -30°C | [kJ/m$^2$] | 9.3 | 7.4 | 10.8 | 8.5 | 13.6 |
| unnotched Izod impact strength | | | | | | |
| 23°C | [kJ/m$^2$] | 150 | 131 | 88 | 105 | 147 |
| -10°C | [kJ/m$^2$] | 114 | 100 | 107 | 103 | 118 |
| -30°C | [kJ/m$^2$] | 101 | 84 | 90 | 100 | 126 |

(continued)

| ABS thermoplastic composition | | C1 | C2 | C3 | C4 | C5 |
|---|---|---|---|---|---|---|
| MVR 220°C/10kg | [mL/10min] | 31.6 | 24.3 | 28.8 | 27.8 | 42.3 |
| ball indentation (Hc) | [N/mm$^2$] | 105 | 99 | 109 | 114 | 106 |

Table 4: PC/ABS thermoplastic compositions D1 to D5

| PC/ABS thermoplastic composition | | D1 | D2 | D3 | D4 | D5 |
|---|---|---|---|---|---|---|
| | | | comparison | | | |
| graft rubber polymer | | I1 | I2 | I3 | I4 | I5 |
| notched Izod impact strength | | | | | | |
| 23°C | [kJ/m$^2$] | 45.9 | 45.4 | 46.5 | 49.5 | 45.9 |
| -10°C | [kJ/m$^2$] | 44.9 | 38.5 | 42.7 | 45.0 | 41.9 |
| -30°C | [kJ/m$^2$] | 36.8 | 36.8 | 37.7 | 41.0 | 39.4 |
| MVR 260°C/5kg | [mL/10min] | 15.3 | 7.3 | 11.9 | 7.8 | 19.8 |
| ball indentation (Hc) | [N/mm$^2$] | 93 | 92 | 98 | 93 | 92 |
| Vicat B/120 | [°C] | 109 | 108 | 109 | 110 | 109 |

Table 5: Polyamide-6/ABS thermoplastic compositions E1 to E4

| Polyamide-6/ABS thermoplastic composition | | E1 | E2 | E3 | E4 |
|---|---|---|---|---|---|
| | | | comparison | | |
| graft rubber polymer | | I1 | I2 | I3 | I4 |
| notched Izod impact strength | | | | | |
| 23°C | [kJ/m$^2$] | 68.1 | 75.1 | 61.6 | 75.0 |
| -10°C | [kJ/m$^2$] | 53.7 | 61.7 | 46.0 | 58.9 |
| -20°C | | 46.1 | 38.4 | 25.9 | 25.0 |
| MVR 260°C/5kg | [mL/10min] | 10.9 | 9.7 | 8.9 | 6.9 |
| ball indentation (Hc) | [N/mm$^2$] | 81 | 76 | 82 | 82 |
| Vicat A/120 | [°C] | 189 | 189 | 187 | 192 |

The thermoplastic resin compositions according to the invention have improved and/or well-balanced properties which are a better melt flow and higher impact strength compared to the comparative examples. With the graft rubber polymer I1, I4 and I5 according to the invention it is possible to get improved properties in ABS, PC/ABS and polymaide-6/ABS compositions compared to the comparison examples. Particularly graft rubber polymers I4 and I5 show that good thermoplastic resin compositions can be obtained using starting rubber latices having a weight average particle diameter Dw of equal to or less than 120 nm, and a K-value of less than 2.3 nm or more than 6.0 nm.

Following examples 61 and 63 in EP 0394779 A2 the following comparison samples are performed.

Rubber latex according to example 56 in EP 0394779 A2:

A butadiene rubber seed latex with a weight average particle diameter Dw of 55 nm is used in an amount of 1.1 wt.-% (as solid material) based on the butadiene monomer which is used for the subsequent seed-feed emulsion polymerisation. As emulsifier 1.1 wt.-% the sodium salt of a disproportionated rosin (amount of sodium dehydroabietate: 52 wt.-%, sodium abietate: 0 wt.-%), as initiator 0.19 wt.-% of potassium persulfate and as chain transfer agent 0.75 wt.-% of tert.-dodecylmercaptane are used (all based on the butadiene monomer). The gel content of the butadiene rubber is 86 wt.-% measured with the procedure reported in EP 0394779 A2.

The weight average particles diameter Dw is 183 nm and the $D_{50}$ weight average particle diameter is 187 nm.

($D_{50}$ weight average particle diameter is the particle diameter at which 50 wt.-% of the particles are smaller or larger).

Graft polymer according to example 61 in EP 0394779 A2

The rubber latex according to example 56 in EP 0394779 A2 was grafted with styrene and acrylonitrile according to the graft polymers I of the present application. The graft rubber latex is stabilized with ca. 0.6 wt.-parts of a phenolic antioxidant and precipitated with sulfuric acid, washed with water and the wet graft powder is dried at 70°C (residual humidity less than 0.5 wt.-%).

As emulsifier 2 wt.-parts of the composition 1 in table 1 in EP 0394779 A2 as sodium salt are used.

Graft polymer according to example 63 in EP 0394779 A2

The rubber latex according to example 56 in EP 0394779 A2 was grafted with styrene and acrylonitrile according to the graft polymers I of the present application. The graft rubber latex is stabilized with ca. 0.6 wt.-parts of a phenolic antioxidant and precipitated with sulfuric acid, washed with water and the wet graft powder is dried at 70°C (residual humidity less than 0.5 wt.-%).

As emulsifier 2 wt.-parts of a sodium salt of a disproportionated rosin (amount of sodium dehydroabietate: 52 wt.-%, sodium abietate: 0 wt.-%), are used.

Thermoplastic compositions were produced according to the examples C and D of present application.

ABS thermoplastic compositions using graft polymer according to example 61 and 63 in EP 0394779 A2

| ABS thermoplastic composition | | ABS-1 | ABS-2 |
|---|---|---|---|
| graft rubber polymer | | with graft polymer according to example 61 | with graft polymer according to example 63 |
| notched Izod impact strength | | | |
| 23°C | [kJ/m$^2$] | 7.6 | 6.9 |
| -10°C | [kJ/m$^2$] | 6.6 | 5.9 |
| -30°C | [kJ/m$^2$] | 5.8 | 5.4 |
| unnotched Izod impact strength | | | |
| 23°C | [kJ/m$^2$] | 19.6 | 20.5 |
| -10°C | [kJ/m$^2$] | 20.5 | 20.5 |
| -30°C | [kJ/m$^2$] | 20.7 | 24.2 |
| MVR 220°C/10kg | [mL/10min] | 29.1 | 37.5 |
| ball indentation (Hc) | [N/mm$^2$] | 110 | 113 |

PC/ ABS thermoplastic compositions using graft polymer according to example 61 and 63 in EP 0394779 A2

| PC/ABS thermoplastic composition | | PC/ABS-1 | PC/ABS-2 |
|---|---|---|---|
| graft rubber polymer | | with graft polymer according to example 61 | with graft polymer according to example 63 |
| notched Izod impact strength | | | |
| 23°C | [kJ/m$^2$] | 30.2 | 31.4 |
| -10°C | [kJ/m$^2$] | 27.3 | 28.3 |
| -30°C | [kJ/m$^2$] | 22.7 | 24.9 |
| MVR 260°C/5kg | [mL/ 10min] | 14.7 | 18.9 |
| ball indentation (Hc) | [N/mm$^2$] | 95 | 98 |
| Vicat B/120 | [°C] | 110 | 110 |

It is evident that the materials ABS-1, ABS-2, PC/ABS-1 and PC/ABS-2 have an insufficient impact strength.

## Claims

1. A process for the preparation of an agglomerated rubber latex, which process comprises the following steps:

   a) emulsion polymerization of the at least one unsaturated monomer in the presence of at least one resin acid-based emulsifier and at least one alkalipersulfate initiator to obtain a starting rubber latex having a weight average particle diameter Dw of equal to or less than 120 nm, and wherein the following relation is met:

   $$K = W * (1-1.4 * S) * D_W$$

   is less than 2.3 nm or more than 6.0 nm, and wherein
   W denotes the amount, in parts per one hundred parts by weight (pphr) of latex solids, of decomposed alkalipersulfate determined by iodometric titration,
   S is the amount of an optional salt (in weight-% based on latex solids),

   b) subjecting said starting rubber latex to agglomeration,

   wherein the content of fatty acids in the resin acid based emulsifier is less than 1 % by weight based on the total weight of the resin acid-based emulsifier.

2. The process according to claim 1, wherein the agglomeration step b) is carried out by the addition of at least one acid anhydride, and which comprises the step of
   adding at least one base after the agglomeration step b).

3. The process according to claim 1 or 2, wherein the weight average particle diameter Dw of the starting rubber latex obtained in step a) is less than 85 nm.

4. A process according to any one of claims 1 to 3, wherein the agglomeration step b) is carried out so as to obtain an agglomerated rubber latex with a weight average particle diameter Dw of 150 to 2000 nm.

5. A process according to any of claims 1 to 4, wherein the at least one starting latex is obtained by emulsion polymerization of butadiene or a mixture of butadiene and styrene.

6. The process according to any of claims 1 to 5, wherein the at least one starting rubber is obtained without using a seed latex.

7. Agglomerated rubber latices as obtainable by the process according to any of claims 1 to 6.

8. Use of the agglomerated rubber latices according to claim 7 for the production of graft rubber polymers.

9. A process for producing graft rubber polymers comprising the polymerization of the at least one unsaturated monomer in the presence of the agglomerated rubber latices according to claim 7.

10. Graft rubber polymers as obtainable from the process of claim 9.

11. Graft rubber polymers comprising the agglomerated rubber particles obtained from the agglomerated rubber latices according to claim 7.

12. Use of the graft rubber polymers according to claim 10 or 11 for the manufacture of thermoplastic molding compositions.

13. Thermoplastic polymer composition, comprising the graft rubber polymers according to claims 10 or 11 and at least one thermoplastic polymer.

**14.** Thermoplastic polymer composition containing:

I) at least a graft rubber polymer obtained by emulsion polymerisation of styrene and acrylonitrile in a weight ratio of 95:5 to 50:50, it being possible for styrene and/or acrylonitrile to be replaced partially by alpha-methylstyrene, methyl methacrylate, maleic anhydride or N-phenylmaleimide or mixtures thereof, in the presence of at least one rubber latex (A) with a weight average particle diameter Dw of 150 to 2000 nm,
II) at least one copolymer of styrene and acrylonitrile in a weight ratio of from 95:5 to 50:50, it being possible for styrene and/or acrylonitrile to be replaced partially by alpha-methylstyrene, methyl methacrylate, maleic anhydride or N-phenylmaleimide or mixtures thereof,

which polymer composition is **characterised in that** the rubber latex (A) is obtained by agglomeration of a rubber latex (B) with a weight average particle diameter Dw of smaller than 85 nm and that for the manufacturing of the rubber latex (B) only resin acid-based emulsifier as soap is used and no seed latex is used.

**15.** Thermoplastic polymer composition containing:

I) at least a graft rubber polymer obtained by emulsion polymerisation of styrene and acrylonitrile in a weight ratio of 95:5 to 50:50, it being possible for styrene and/or acrylonitrile to be replaced partially by alpha-methylstyrene, methyl methacrylate, maleic anhydride or N-phenylmaleimide or mixtures thereof, in the presence of at least one rubber latex (A) with a weight average particle diameter Dw of 150 to 2000 nm,
II) at least one copolymer of styrene and acrylonitrile in a weight ratio of from 95:5 to 50:50, it being possible for styrene and/or acrylonitrile to be replaced partially by alpha-methylstyrene, methyl methacrylate, maleic anhydride or N-phenylmaleimide or mixtures thereof,

which polymer composition is **characterised in that** the rubber latex (A) is obtained by the process of claim 1.

**Patentansprüche**

**1.** Verfahren zur Herstellung von agglomeriertem Kautschuklatex, wobei das Verfahren die folgenden Schritte umfasst:

a) Emulsionspolymerisation des mindestens einen ungesättigten Monomers in Anwesenheit von mindestens einem auf Harzsäure basierenden Emulgator und mindestens einem Alkalipersulfatinitiator, um einen Ausgangskautschuklatex mit einem gewichtsgemittelten Partikeldurchmesser $D_w$ gleich oder kleiner als 120 nm zu erhalten,

und wobei die folgende Beziehung erfüllt wird:

$$K = W*(1-1,4*S)*D_W$$

ist kleiner als 2,3 nm oder größer als 6,0 nm, und wobei
W die Menge an zersetztem Alkalipersulfat, bestimmt durch iodometrische Titration, in Teilen auf einhundert Teile des Gewichts (pphr) an Latexfeststoffen angibt,
S die Menge eines optionalen Salzes ist (in Gew.%, bezogen auf Latexfeststoffe),

b) Unterziehen des Ausgangskautschuklatex Agglomeration,

wobei der Gehalt an Fettsäuren in dem auf Harzsäure basierenden Emulgator weniger als 1 Gew.% beträgt, bezogen auf das Gesamtgewicht des auf Harzsäure basierenden Emulgators.

**2.** Verfahren nach Anspruch 1, wobei der Agglomerationsschritt b) durch die Zugabe von mindestens einem Säureanhydrid durchgeführt wird, und das den Schritt des Zugebens von mindestens einer Base nach dem Agglomerationsschritt b) umfasst.

**3.** Verfahren nach Anspruch 1 oder 2, wobei der gewichtsgemittelte Partikeldurchmesser $D_w$ des in Schritt a) erhaltenen Ausgangskautschuklatex kleiner als 85 nm ist.

4. Verfahren nach einem der Ansprüche 1 bis 3, wobei der Agglomerationsschritt b) so ausgeführt wird, dass ein agglomerierter Kautschuklatex mit einem gewichtsgemittelten Partikeldurchmesser $D_w$ von 150 bis 2000 nm erhalten wird.

5. Verfahren nach einem der Ansprüche 1 bis 4, wobei der mindestens eine Ausgangslatex durch Emulsionspolymerisation von Butadien oder einer Mischung von Butadien und Styrol erhalten wird.

6. Verfahren nach einem der Ansprüche 1 bis 5, wobei der mindestens eine Ausgangslatex ohne Verwenden eines Impflatex erhalten wird.

7. Agglomerierte Kautschuklatizes, erhältlich nach dem Verfahren gemäß einem der Ansprüche 1 bis 6.

8. Verwendung der agglomerierten Kautschuklatizes nach Anspruch 7 zur Produktion von Pfropfkautschukpolymeren.

9. Verfahren zur Produktion von Pfropfkautschukpolymeren, umfassend die Polymerisation des mindestens einen ungesättigten Monomers in Gegenwart der agglomerierten Kautschuklatizes nach Anspruch 7.

10. Pfropfkautschukpolymere, erhältlich nach dem Verfahren gemäß Anspruch 9.

11. Pfropfkautschukpolymere, umfassend die agglomerierten Kautschukpartikel, die aus den agglomerierten Kautschuklatizes gemäß Anspruch 7 erhalten wurden.

12. Verwendung der Pfropfkautschukpolymere nach Anspruch 10 oder 11 zur Fertigung von thermoplastischen Formungszusammensetzungen.

13. Thermoplastische Polymerzusammensetzung, umfassend die Pfropfkautschukpolymere nach den Ansprüchen 10 oder 11 und mindestens ein thermoplastisches Polymer.

14. Thermoplastische Polymerzusammensetzung, enthaltend:

I) mindestens ein Pfropfkautschukpolymer, das durch Emulsionspolymerisation von Styrol und Acrylnitril in einem Gewichtsverhältnis von 95:5 bis 50:50, wobei es möglich ist, Styrol und/oder Acrylnitril teilweise durch alpha-Methylstyrol, Methylmethacrylat, Maleinsäureanhydrid oder N-Phenylmaleimid oder Mischungen davon zu ersetzen, in Gegenwart von mindestens einem Kautschuklatex (A) mit einem gewichtsgemittelten Partikeldurchmesser $D_w$ von 150 bis 2000 nm erhalten wird,
II) mindestens ein Copolymer von Styrol und Acrylnitril in einem Gewichtsverhältnis von 95:5 bis 50:50, wobei es möglich ist, Styrol und/oder Acrylnitril teilweise durch alpha-Methylstyrol, Methylmethacrylat, Maleinsäureanhydrid oder N-Phenylmaleimid oder Mischungen davon zu ersetzen,

wobei die Polymerzusammensetzung **dadurch gekennzeichnet ist, dass** der Kautschuklatex (A) durch Agglomeration eines Kautschuklatex (B) mit einem gewichtsgemittelten Partikeldurchmesser $D_w$ kleiner als 85 nm erhalten wird, und dass für die Herstellung des Kautschuklatex (B) nur auf Harzsäure basierter Emulgator als Seife verwendet wird und kein Impflatex verwendet wird.

15. Thermoplastische Polymerzusammensetzung, enthaltend:

I) mindestens ein Pfropfkautschukpolymer, das durch Emulsionspolymerisation von Styrol und Acrylnitril in einem Gewichtsverhältnis von 95:5 bis 50:50, wobei es möglich ist, Styrol und/oder Acrylnitril teilweise durch alpha-Methylstyrol, Methylmethacrylat, Maleinsäureanhydrid oder N-Phenylmaleimid oder Mischungen davon zu ersetzen, in Gegenwart von mindestens einem Kautschuklatex (A) mit einem gewichtsgemittelten Partikeldurchmesser $D_w$ von 150 bis 2000 nm erhalten wird,
II) mindestens ein Copolymer von Styrol und Acrylnitril in einem Gewichtsverhältnis von 95:5 bis 50:50, wobei es möglich ist, Styrol und/oder Acrylnitril teilweise durch alpha-Methylstyrol, Methylmethacrylat, Maleinsäureanhydrid oder N-Phenylmaleimid oder Mischungen davon zu ersetzen,

wobei die Polymerzusammensetzung **dadurch gekennzeichnet ist, dass** der Kautschuklatex (A) nach dem Verfahren von Anspruch 1 erhalten wird.

## Revendications

1. Procédé pour la préparation d'un latex de caoutchouc aggloméré, lequel procédé comprend les étapes suivantes :

   a) polymérisation en émulsion de l'au moins un monomère insaturé en la présence d'au moins un émulsifiant à base d'acide de résine et d'au moins un initiateur de type persulfate d'alcali pour obtenir un latex de caoutchouc de départ possédant un diamètre moyen de particule en poids $D_w$ égal ou inférieur à 120 nm, et la relation suivante étant satisfaite :

   $$K = W*(1 - 1,4*S)*D_w$$

   étant inférieur à 2,3 nm ou supérieur à 6,0 nm, et
   W désignant la quantité, en parties par cent parties en poids (pphr) de solides de latex, de persulfate d'alcali décomposé déterminée par titrage iodométrique,
   S étant la quantité d'un sel éventuel (en % en poids sur la base de solides de latex),

   b) soumission dudit latex de caoutchouc de départ à une agglomération,

   la teneur en acides gras dans l'émulsifiant à base d'acide de résine étant inférieure à 1 % en poids sur la base du poids total de l'émulsifiant à base d'acide de résine.

2. Procédé selon la revendication 1, l'étape d'agglomération b) étant mise en œuvre par l'ajout d'au moins un anhydride d'acide, et qui comprend l'étape
d'ajout d'au moins une base après l'étape d'agglomération b).

3. Procédé selon la revendication 1 ou 2, le diamètre moyen de particule en poids $D_w$ du latex de caoutchouc de départ obtenu dans l'étape a) étant inférieur à 85 nm.

4. Procédé selon l'une quelconque des revendications 1 à 3, l'étape d'agglomération b) étant mise en œuvre de sorte à obtenir un latex de caoutchouc aggloméré doté d'un diamètre moyen de particule en poids $D_w$ de 150 à 2 000 nm.

5. Procédé selon l'une quelconque des revendications 1 à 4, l'au moins un latex de départ étant obtenu par polymérisation en émulsion de butadiène ou d'un mélange de butadiène et de styrène.

6. Procédé selon l'une quelconque des revendications 1 à 5, l'au moins un caoutchouc de départ étant obtenu sans utiliser un latex germe.

7. Latex de caoutchouc agglomérés tels qu'ils peuvent être obtenus par le procédé selon l'une quelconque des revendications 1 à 6.

8. Utilisation des latex de caoutchouc agglomérés selon la revendication 7 pour la production de polymères de caoutchouc greffé.

9. Procédé pour la production de polymères de caoutchouc greffé comprenant la polymérisation de l'au moins un monomère insaturé en la présence des latex de caoutchouc agglomérés selon la revendication 7.

10. Polymères de caoutchouc greffé tels qu'ils peuvent être obtenus par le procédé selon la revendication 9.

11. Polymères de caoutchouc greffé comprenant les particules de caoutchouc agglomérées obtenues à partir des latex de caoutchouc agglomérés selon la revendication 7.

12. Utilisation des polymères de caoutchouc greffé selon la revendication 10 ou 11 pour la fabrication de compositions de moulage thermoplastiques.

13. Composition de polymère thermoplastique, comprenant les polymères de caoutchouc greffé selon les revendications 10 ou 11 et au moins un polymère thermoplastique.

**14.** Composition de polymère thermoplastique contenant :

I) au moins un polymère de caoutchouc greffé obtenu par polymérisation en émulsion de styrène et d'acrylonitrile en un rapport en poids de 95 : 5 à 50 : 50, le styrène et/ou l'acrylonitrile pouvant être remplacés partiellement par l'alpha-méthylstyrène, le méthacrylate de méthyle, l'anhydride maléique ou le N-phénylmaléimide ou des mélanges correspondants, en la présence d'au moins un latex de caoutchouc (A) doté d'un diamètre moyen de particule en poids $D_w$ de 150 à 2 000 nm,
II) au moins un copolymère de styrène et d'acrylonitrile en un rapport en poids allant de 95 : 5 à 50 : 50, le styrène et/ou l'acrylonitrile pouvant être remplacés partiellement par l'alpha-méthylstyrène, le méthacrylate de méthyle, l'anhydride maléique ou le N-phénylmaléimide ou des mélanges correspondants,

laquelle composition de polymère est **caractérisée en ce que** le latex de caoutchouc (A) est obtenu par agglomération d'un latex de caoutchouc (B) doté d'un diamètre moyen de particule en poids $D_w$ de moins de 85 nm et **en ce que** pour la fabrication du latex de caoutchouc (B) seulement un émulsifiant à base d'acide de résine en tant que savon est utilisé et aucun latex germe n'est utilisé.

**15.** Composition de polymère thermoplastique contenant :

I) au moins un polymère de caoutchouc greffé obtenu par polymérisation en émulsion de styrène et d'acrylonitrile en un rapport en poids de 95 : 5 à 50 : 50, le styrène et/ou l'acrylonitrile pouvant être remplacés partiellement par l'alpha-méthylstyrène, le méthacrylate de méthyle, l'anhydride maléique ou le N-phénylmaléimide ou des mélanges correspondants, en la présence d'au moins un latex de caoutchouc (A) doté d'un diamètre moyen de particule en poids $D_w$ de 150 à 2 000 nm,
II) au moins un copolymère de styrène et d'acrylonitrile en un rapport en poids allant de 95 : 5 à 50 : 50, le styrène et/ou l'acrylonitrile pouvant être remplacés partiellement par l'alpha-méthylstyrène, le méthacrylate de méthyle, l'anhydride maléique ou le N-phénylmaléimide ou des mélanges correspondants,

laquelle composition de polymère est **caractérisée en ce que** le latex de caoutchouc (A) est obtenu par le procédé selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 394779 B1
- WO 0162812 A1
- CA 958137 A
- CA 1039439 A1
- DE 1804758 A1
- EP 0007810 A2
- US 3663656 A1
- GB 1521805 A
- US 3551370 A1
- US 3558541 A1
- US 3652721 A1
- US 3793403 A1
- US 3928494 A1
- US 3988010 A1
- WO 2008020012 A2
- WO 0026298 A1
- EP 1414899 B1
- US 20030139514 A1
- US 20090076205 A1
- US 20030139514 A
- DE 3639904 A
- DE 3913509 A
- DE 2420358 A
- DE 2724360 A
- DE 1495626 A
- DE 2232877 A
- DE 2703376 A
- DE 2714544 A
- DE 3000610 A
- DE 3832396 A
- DE 3077934 A
- DE 2842005 A
- DE 3506472 A
- DE 2407647 A
- DE 2407776 A
- DE 2715932 A
- DE 1900270 A
- US 3692744 A
- EP 0394779 A2


### Non-patent literature cited in the description


- **GEORGE ODIAN.** *Principles of Polymerization,* 2004, 211
- **HOUBEN-WEYL.** *Methoden der Organischen Chemie,* vol. 14 (1), 263-297
- **W. SCHOLTAN ; H. LANGE.** *Kolloid Z. u. Z. Polymere,* 1972, vol. 250, 782-796
- **A. SCHMIDT.** Houben-Weyl, Methoden der Organischen Chemie. Georg Thieme Verlag, 1987, vol. E20, 238-248
- **G. LAGALY ; O. SCHULZ ; R. ZIEMEHL.** Dispersionen und Emulsionen: eine Einführung in die Kolloidik feinferteilter Stoffe einschlieBlich der Tonminerale, Darmstadt. Steinkopf-Verlag, 1997, 282
- **HOUBEN-WEYL.** Methoden der Organischen Chemie, Makromolekulare Stoffe. Thieme Verlag, 1961, 307
- **HOUBEN-WEYL.** *Methoden der Organischen Chemie,* vol. 14 (1), 263-297
- Kunststoff-Handbuch. Carl Hanser Verlag, 1973, vol. VIII, 695